# EUROPEAN PATENT APPLICATION

(11) **EP 4 800 048 A1**
(43) Date of publication of application: **02.09.2026**
(21) Application number: 25160913.7
(22) Date of filing: 28.02.2025
(51) Int. Cl.: C08G 18/24, C08G 18/30, C08G 18/40, C08G 18/42, C08G 18/48, C08G 18/50, C08G 18/76, C08K 3/34, C09D 175/08

(54) **TWO COMPONENT POLYURETHANE COMPOSITION WITH LATENT WATER**

(71) Applicant: Sika Technology AG, 6340 Baar (CH)
(72) Inventor: KECK, Axel, 72574 Bad Urach (DE); PREUSCH, Felix, 72574 Bad Urach (DE); CORSARO, Antonio, 8048 Zürich (CH)
(74) Representative: Sika Patent Attorneys

(57) **Abstract**

The invention relates to a two-component polyurethane composition with latent water which is suitable for printing-sleeve applications, wherein the post-curing of the cured polyurethan is improved, comprising in a first component at least one polyol; at least one drying agent and in a second component at least one isocyanate, characterized in that the first component contains latent water reversibly bound by the drying agent.

Further aspects of the invention include the use of the inventive composition as an adhesive coating, in particular in printing application, a method of coating and an article obtained from said method.

## Description

### Technical Field

The invention relates to two-component polyurethane compositions and their use as coatings, in particular for printing sleeves.

### Prior Art

Polyurethane compositions can be used in a variety of applications in construction and industry. They can also be used in printing applications, as, for example, a topcoat layer for printing sleeve coatings.

Such polyurethane compositions in printing applications should exhibit sufficient hardness and provide permanent compressibility to absorb bouncing in the printing process. Furthermore, the polyurethane layer should withstand repeated use and have good mechanical resilience. For printing, a plate mounting tape will be attached on top of the polyurethane topcoat layer. To ensure good printability the polyurethane layer should thus provide an appropriately hard and smooth surface.

In a two-component polyurethane composition the crosslinking reaction leading to the cured elastomer corresponds to the reaction of the isocyanate groups of a polyisocyanate with an alcohol group of a polyol to form a urethane group. Two-component polyurethane compositions are often formulated in such a way that a slight molar excess of the isocyanate component is present, leading to improved adhesion to certain substrates, because the isocyanate groups can react with functional groups of the substrate surface. In addition, excess isocyanate still present after curing will react over time like a one-component system with the water from ambient air humidity to form amines under emission of carbon dioxide gas, and subsequently urea groups when these amines react with further isocyanates.

The polyurethane layer is usually the top layer of the printing sleeve.

When an adhesive mounting tape is placed on top of the polyurethane layer after the crosslinking reaction, the evolution of CO₂ gas caused by the reaction of the excess isocyanates with water will lead to formation of bubbles between the sleeve top-layer and the mounted tape and an uneven surface on the printing sleeve. This is highly unwanted in printing applications and needs to be avoided.

To ensure an even and smooth surface, the excess isocyanates need to be fully reacted before an adhesive mounting tape is attached on top of the sleeve top layer. When this so-called post-curing happens solely by the reaction of water from ambient moisture, the water must diffuse from the outside through the cured polymer matrix. Thus, the reaction in the outer parts of the polymer matrix is faster than on the inside. Post-curing by the diffusion of water from ambient moisture at room temperature is dependent on the layer thickness, but will most commonly take several days, if not weeks.

A widely used strategy to accelerate the reaction of the remaining isocyanate groups with water is to apply high temperature and humidity to the cured product. However, this type of post-curing requires additional working steps and significant amounts of energy.

There is thus a need for two-component polyurethane composition wherein the reaction of the excess isocyanate groups present after the curing reaction with water is fast and energy-efficient. Ideally, the sped-up reaction of the excess isocyanate groups does not rely on applying high temperatures and additional humidity.

### Summary of the Invention

Thus, an object of the present invention to provide a two-component polyurethane composition which is suitable for printing-sleeve coating applications, wherein the post-curing of the cured polyurethan is improved.

Surprisingly, this object could be achieved by the two-component polyurethane composition with the features of independent claim 1. The inventive composition is characterized in that the first component contains latent water, reversibly bound by a drying agent, which will release water in a controlled manner from within the polymer matrix after the curing reaction. The reaction of the excess isocyanate groups with water then happens uniformly and much faster compared to the water diffusion from ambient moisture. Furthermore, the invention safes additional working steps and energy because the cured polyurethane does not need to be heated or exposed to additional moisture.

Further aspects of the invention are the subject of further independent claims. Particularly preferred embodiments of the invention are the subject of the dependent claims.

### Ways of executing the Invention

The present invention relates in a first aspect to a two-component polyurethane composition comprising
in a first component **A**
- at least one polyol **P;**
- at least one drying agent **DA;**
   and in a second component **B**
- at least one isocyanate **I;**
characterized in that the first component **A** contains latent water **LW** reversibly bound by the drying agent **DA.**

Substance names beginning with "poly", such as polyol or polyisocyanate, refer to substances containing, in a formal sense, two or more of the functional groups that occur in their name per molecule.

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

A "polyurethane" refers to a polymer composed of organic units joined by urethane (carbamate) links. The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

The term "NCO" refers to the isocyanate functional group. "NCO content" refers to the content of isocyanate groups in % by weight.

The term "OH" refers to the alcohol functional group. "OH content" refers to the content of alcohol groups in % by weight.

"Molecular weight" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

The term "molar ratio" in connection with reactive groups relates to the ratio of the number of molar equivalents of the corresponding reactive groups.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

All industrial standards and norms cited in this document refer to the respective edition in force on the time of filing of the first application of this invention, if not otherwise defined.

"Standard climatic conditions" refer to a temperature of 23±1 °C. and a relative air humidity of 50±5%.

An "Angstrom" Å is a unit of length equal to 10⁻¹⁰ meter or 0.1 nanometer.

The term "drying agent" or "desiccant" refers to substances that can remove and contain liquids, in particular water. Thus, they can be used to dry substances. There are different types of drying agents, which are categorized according to their mechanism in chemical and physical desiccants. Chemical desiccants use chemical reactions to remove water molecules. This process often involves the formation of a new compound or a change in the chemical structure of the desiccant. Physical desiccants on the other hand are materials that remove moisture through physical processes, without changing the chemical structure or creating new chemical compounds. This means that the water molecules are attracted to the surface of the physical desiccant material and held there by intermolecular forces. Some drying agents work by a combination of chemical and physical processes.

Absorption and desorption of liquids by a drying agent **DA** according to this invention is an equilibrium process and thus reversible.

In the present document the term "latent water" describes water (H₂O) that is reversibly bound (physiosorbed or chemisorbed) by another medium, preferably a drying agent. The latent water can desorb again and diffuse in the composition as free water. Thus, the latent water is reversibly bound by the drying agent **DA.** Once curing of the polyurethane material commences, the latent water bound by the drying agent **DA** will not desorb instantaneous, but gradually over time. Desorption is especially slower than the curing reaction of polyols **P** with isocyanate **I**.

The "water absorption potential" or "water absorption capacity" refers to the maximal amount of water that a drying agent can remove and contain. It is usually described in percentages (%) of the total weight of the drying agent.

The term "pre-loaded" or "loaded" refers to a drying agent that has been in contact with water and therefore contains a certain amount of latent water **LW.** Thus, a pre-loaded drying agent **DA** contains the latent water and the latent water **LW** will eventually be able to desorb again.

In the present document, "two-component" refers to a composition in which the reactive constituents of the composition are present in two different components which are stored in separate containers. The reactive constituents are mainly the polyol **P** in a first component **A** and the isocyanate **I** in a second component **B.**

Only shortly before or during the application of the composition are the two components mixed with one another, whereupon the mixed composition cures by crosslinking reaction of polyol **P** of component **A** and isocyanate I of component **B.** The latent water present in the inventive compositions is not being desorbed fast enough to react immediately with the isocyanates, thus the reaction of isocyanates with formerly latent water happens after the main cross-linking reaction of polyol **P** with isocyanate **I.**

Component **A** is therefore mixed with component **B** immediately prior to or on application, especially by means of a static mixer or by means of a dynamic mixer. It is possible to use automatic application equipment, such as manually operated application guns with static or dynamic mixing chambers, or fully automated equipment such as industrial robots equipped with mixing chambers and application nozzles.

The mixing ratio of component **A** to component **B** preferably is within a volume ratio of component **A** to component **B** of between 0.1:1 and 200:1, preferably 1:1 to 100:1.

This means that a standard application unit for boostered polyurethane compositions can be used, which typically has a volume ratio of polyurethane adhesive to booster (water-containing paste) of about 50:1.

### Drying agent DA

In principle, the drying agent **DA** can be any desiccant known to the person skilled in the arts, in particular a physical or chemical desiccant.

In preferred embodiments of the two-component polyurethane composition according to the invention, the drying agent **DA** comprises a physical or chemical desiccant.

Examples for desiccants include silica gel, calcium oxide, calcium chloride, sodium sulfate, activated alumina, bentonite clay, activated carbon, oxazolidines (Incozol^{®} from Incorez), polymeric hydrogels and molecular sieves, preferably molecular sieves made from zeolites.

In preferred embodiments of the two-component polyurethane composition according to the invention, the drying agent **DA** comprises molecular sieves, in particular molecular sieves made from zeolites.

Zeolites are aluminosilicates. Their highly structured framework gives zeolites their porous structures, which is essential for their capability as drying agent.

In preferred embodiments, the drying agent **DA** consists of molecular sieves, in particular micronized, highly porous, crystalline aluminosilicates.

In preferred embodiments the two-component polyurethane composition according to the invention, the drying agent **DA** comprises molecular sieves, in particular molecular sieves made from zeolites with pore openings of between 1 and 8 Å, preferably between 2 and 6 Å, most preferably between 2 and 5 Å.

The ideal pore size for zeolites for water absorption is typically between 1 and 8 Angstroms. This range allows the zeolite to selectively absorb water molecules while excluding larger molecules. It is important to note that the optimal pore size can vary depending on the specific application and the desired level of water removal. The pore size can for example be adjusted to contain more latent water or to remove water more efficiently.

In preferred embodiments the two-component polyurethane composition according to the invention comprises between 0.5 to 25 wt.-%, preferably 1 to 20 wt.-%, most preferably 2 to 15 wt.-% of at least one drying agent **DA,** based on the total weight of the two-component composition.

Preferably, the drying agent **DA** is present in the first component **A.**

In preferred embodiments the two-component polyurethane composition according to the invention, comprises in the first component **A** between 0.5 to 20 wt.-%, preferably 1 to 15 wt.-%, most preferably 2 to 10 wt.-% of at least one drying agent **DA,** based on the total weight of component **A.**

### Latent water LW

Preferably, the latent water **LW** is present in the first component **A.**

In preferred embodiments of the two-component polyurethane composition according to the invention, the amount of latent water **LW** in the drying agent **DA** is between more than 0 and 30 wt.-%, preferably between 0.5 and 25 wt.-%, most preferably between 1 and 20 wt.-% with respect to the weight of component **DA** in component **A.**

In preferred embodiments of the two-component polyurethane composition according to the invention, the drying agent **DA** has been loaded with between more than 0 and 75%, preferably with between 0.1 and 60 %, most preferably with between 1 and 50 % of water with respect to the total water absorption capacity of the drying agent **DA.**

In preferred embodiments of the two-component polyurethane composition according to the invention, the component **A** comprises between more than 0 and 10 wt.-%, preferably between 0.1 and 10 wt.-%, most preferably between 1 and 5 wt.-% of latent water **LW** with respect to the total weight of the first component **A** of water.

### Polyol P

In principle, the polyol **P** can be any polyol known to the person skilled in the arts, in particular a polyester polyol and/or a polyether polyol.

The two-component polyurethane composition according to the invention, characterized in that the polyol **P** is a polyester polyol and/or polyether polyol.

Particularly suitable polyols are polyester polyols, also known as oligoesterols, produced, for example, from di- to trihydric alcohols such as 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane or mixtures of the aforementioned alcohols with organic dicarboxylic acids or their anhydrides or esters such as succinic acid, glutaric acid, adipic acid, pimelic acid, cork acid, azelaic acid, sebacic acid, dodecanedicarboxylic acid, maleic acid, fumaric acid, phthalic acid, isophthalic acid, terephthalic acid and hexahydrophthalic acid or mixtures of the aforementioned acids, as well as polyester polyols from lactones such as ε-caprolactone.

Preferred are liquid, amorphous, semi-crystalline and crystalline polyester diols and triols at room temperature, in particular polyester diols. Suitable polyester diols that are liquid at room temperature are not solid far below room temperature, for example at temperatures between 0 °C and 25 °C and, like amorphous polyester polyols, are preferably used in combination with at least one semi-crystalline or crystalline polyester polyol. Adipic acid/hexanediol polyester, azelaic acid/hexanediol polyester and dodecanedicarboxylic acid/hexanediol polyester with a melting point in the range from 40 °C to 80 °C, in particular 50 °C to 70 °C, are particularly preferred as polyester diols.

Suitable polyester diols are in particular OH-functional polyesters of adipic acid or sebacic acid or dodecanedicarboxylic acid with 1,4-butanediol or 1,6-hexanediol.

Examples for suitable polyester polyols as polyol **P** are the commercially available difunctional polyester polyols and/or the partially branched polyester polyols Lupraphen^{®} 1901/1, Lupraphen 1600/4, Lupraphen 2602/1, Lupraphen^{®} 2601/1(all sold by BASF), Desmophen 1652, Desmophen 1700, Desmophen 1431 (all sold by Covestro).

Suitable polyols **P** are in particular polyether polyols, such as polyether polyols with repeat units such as 1,2-ethyleneoxy, 1,2-propyleneoxy, 1,3-propyleneoxy, 1,2-butyleneoxy, or 1,4-butyleneoxy groups. Preference is given to 1,2-ethyleneoxy (EO) and/or 1,2-propyleneoxy (PO) groups. More preferably, repeat units present in the polyether polyol are mainly or exclusively 1,2-propyleneoxy groups.

Preferred are polyether polyols with an OH number in the range of 6 to 280 mg KOH/g, in particular 7.5 to 112 mg KOH/g.

Preferred are polyether polyols with an average molecular weight Mn of more than 2,500 g/mol, preferably in the range from 2,750 to 20,000 g/mol, more preferably 3,000 to 15,000 g/mol, most preferably 4,000 to 10,000 g/mol.

Preferred are polyether polyols with an average OH functionality in the range from 1.6 to 3. As a result of their production, commercial polyether triols contain a certain content of monools, as a result of which their average OH functionality is typically somewhat below 3. They thus typically contain trifunctional and monofunctional components.

Examples for suitable polyether polyols as polyol **P** are the commercially available trifunctional polyether polyol Desmophen 1381 BT, Desmophen^{®} 4011 T, Desmophen 1380 BT, Desmophen 1400 BT (all sold by Covestro) or Voranol CP 260, Voranol CP 300, Voranol CP 450, Vorapel 5001T (all sold by Dow) or Lupranol 3505/1, Lupranol 3300 (all sold by BASF).

Another class of suitable polyether polyols are aminic polyether polyols, which are typically synthesized through a process that involves the ring-opening polymerization of epoxides, such as ethylene oxide or propylene oxide, with an amine, such as ethylene diamine, as starter.

Examples for suitable aminic polyether polyols **P** are the commercially available tetrafunctional polyether polyols based on ethylenediamine and propylene or ethylene oxide Lupranol^{®} 3508/1, Lupranol 3402 (all sold by BASF), Desmophen 4051 B, Desmophen 4050 E (all sold by Covestro).

In preferred embodiments the two-component polyurethane composition according to the invention, comprises 10 to 60 wt.-%, preferably 15 to 60 wt.-%, most preferably 20 to 55 wt.-% of at least one polyol **P,** based on the total weight of the two-component composition.

Preferably, the polyol **P** is present in the first component **A.**

In preferred embodiments of the two-component polyurethane composition according to the invention the first component **A** comprises 40 to 95 wt.-%, preferably 40 to 90 wt.-%, most preferably 50 to 80 wt.-% of at least one polyol **P,** based on the total weight of component **A.**

### Isocyanate I

In principle, the isocyanate **I** can be any isocyanate known to the person skilled in the arts, in particular monomeric diisocyanates.

Preferred as isocyanate I are monomeric diisocyanates such as diphenyl diisocyanate (MDI), toluene diisocyanate (TDI), isophorene diisocyanate (IPDI) or hexamethylene diisocyanate (HDI).

Preferably, the isocyanates I are commercially available.

In preferred embodiments of the two-component polyurethane composition according to the invention the isocyanate **I** is an aromatic, aliphatic or cycloaliphatic diisocyanate, in particular methylene diphenyl diisocyanate (MDI) and/or isophorene diisocyanate (IPDI) and/or toluene diisocyanate (TDI).

Preferred as isocyanates I are especially aromatic diisocyanates.

Preferred as isocyanate **I** is especially MDI. Especially preferred is a mixture of diphenylmethan-4,4-diisocyanate (MDI) with isomers and higher functional honologues (PMDI), such as Desmodur^{®} VKS 20 (sold by Covestro), Lupranat 20MR (sold by BASF), Suprasec 2496 (sold by Huntsman), Voranate M229 (sold by Dow).

In preferred embodiments the two-component polyurethane composition according to the invention comprises 10 to 60 wt.-%, preferably 15 to 60 wt.-%, most preferably 20 to 55 wt.-% of at least one isocyanate **I,** based on the total weight of the two-component composition.

Preferably, the isocyanate **I** is present in the second component **B.**

In preferred embodiments of the two-component polyurethane composition according to the invention, the second component **B** comprises 60 to 100 wt.-%, preferably 60 to 90 wt.-%, most preferably 65 to 85 wt.-% of at least one isocyanate **I,** based on the total weight of component **B.**

### Catalyst C

Suitable as catalyst **C** are all catalysts for the acceleration of the reaction of isocyanate groups with polyols, especially organotin (IV) compounds such as, in particular, dibutyltin diacetate, dibutyltin dilaurate, dibutyltin dichloride, dibutyltin diacetylacetonate, dimethyltin dilaurate, dioctyltin diacetate, dioctyltin dilaurate or dioctyltin diacetylacetonate, complexes of bismuth(III) or zirconium(IV), especially with ligands selected from alkoxides, carboxylates, 1,3-diketonates, oxinate, 1,3-ketoesterates and 1,3-ketoamidates, or compounds containing tertiary amino groups, such as especially 2,2'dimorpholinodiethyl ether.

Examples for a suitable catalysts **C** are the commercially available dioctyltin dilaurate FOMREZ UL-59 (sold by Galata Chemicals), TIB KAT 216 (sold by TIB Chemicals) and REAXIS C216 (sold by Reaxis).

In preferred embodiments the two-component polyurethane composition according to the invention comprises a catalyst **C** selected from tin, bismuth or zirconium compounds, in particular organotin compounds, especially dicotyltin compounds such as dioctyltin dilaurate.

In preferred embodiments the two-component polyurethane composition according to the invention, comprises between 0.001 to 5 wt.-%, preferably between 0.001 to 1 wt.-%, most preferably between 0.01 to 0.5 wt.-% of at least one catalyst **C,** based on the total weight of the two-component composition.

Preferably, the catalyst **C** is present in the first component **A.**

In preferred embodiments of the two-component polyurethane composition according to the invention, the first component **A** comprises between 0.01 to 2 wt.-%, preferably 0.01 to 1 wt.-%, most preferably 0.05 to 0.5 wt.-% of at least one catalyst **C,** based on the total weight of the first component **A.**

### Additives

In preferred embodiments the two-component polyurethane composition according to the invention comprises additives, such as stabilizers, thixotropic agents, defoamers and/or fillers, particularly defoamer and/or fillers.

Suitable stabilizers are especially stabilizers against oxidation, heat, light or UV radiation.

Thixotropic agents allow to control the rheology and viscosity, but also handling and flow of the composition. Suitable thixotropic agents are known to the person skilled in the arts.

Defoamers or air release additives are additives to control the formation and stability of bubbles during the curing process, ensuring a uniform and defect-free product thus improving appearance and physical properties, in particular a perfect surface. Common defoamer types include silicon-based defoamers, particularly polydimethylsiloxanes or related compounds, as well as organic defoamers such as alcohols, fatty acids, ester that are typically used in conjunction with silicon-based defoamers.

An example for a suitable defoamer is the commercially available polyether-modified polysiloxane copolymer BYK-S 732 (sold by BYK).

The defoamer can be present in both components **A** and **B,** or in either of both components **A** and **B,** preferably in the first component **A.**

Suitable as fillers are especially ground or precipitated calcium carbonates, carbon black, silica, colloidal dispersion of small polymer particles (plastisol), barytes, quartz flours, quartz sands, dolomites, wollastonites, calcined kaolines, sheet silicates, such as mica or talc, fly ashes, graphite, PVC powders or hollow beads and any mixture of these fillers.

The filler can be surface-treated, in particular hydrophobized, for example with fatty acid stearate coatings such as stearate, or silane coatings, such as octyl silane. Fillers treated in this manner may have the advantage of better miscibility. The specific choice of filler will depend on the desired properties and application requirements of the final polyurethane product.

Suitable as fillers are especially fibers, in particular glass fibers, carbon fibers, metal fibers, ceramic fibers, hemp fibers, cellulose fibers or plastic fibers such as polyamide fibers, polyethylene fibers or polypropylene fibers,

The filler can be present in both components **A** and **B,** or in either of both components **A** or **B,** preferably in the first component **A.**

In preferred embodiments the two-component polyurethane composition according to the invention comprises 0 to 40 wt.-%, preferably 1 to 30 wt.-%, most preferably 2 to 25 wt.-% of at least one additive, based on the total weight of the two-component composition.

Preferably, the additive is present in both components **A** and **B,** or in either of both components **A** and **B,** most preferably in the first component **A.**

In preferred embodiments of the two-component polyurethane composition according to the invention, the first component **A** comprises 0 to 30 wt.-%, preferably 0.5 to 25 wt.-%, most preferably 0.5 to 20 wt.-% of at least one additive, based on the total weight of the first component **A.**

The two-component polyurethane composition according to the invention, characterized in that said composition comprises
in a first component **A**
   - 40 to 95 wt.-% of at least one polyol **P;**
   - 0.5 to 20 wt.-% of at least one drying agent **DA;**
   - 0.01 to 2 wt.-% of at least one catalyst **C;**
   - 0 to 30 wt.-% of at least one additive;
   - 0.1 to 10 wt.-% of latent water **LW;**
   With respect to the total weight of component **A,**
and in a second component **B**
   - 60 to 100 wt.-% of at least one isocyanate **I;**
   - 0 to 20 wt.-% of at least one additive;

Another aspect of the invention relates to the use of a two-component polyurethane composition according to the invention in printing applications, in particular as a coating, preferably a top coating and/or layer for printing sleeves.

Another aspect of the invention relates to a method of coating a substrate, comprising the steps of
i) Mixing the two components **A** and **B** of the two-component polyurethane composition according to the invention to a substrate;
ii) Applying the composition from i) to a substrate as a coating;
iii) Curing of the coating from ii) at standard climatic conditions.

Another aspect of the invention relates to an article comprising the cured two-component polyurethane composition. This article is preferably a printing sleeve, wherein the top layer of said article is consisting of the cured two-component polyurethane composition.

Another aspect of the invention relates to an article obtained from the inventive method of coating, in particular a printing sleeve.

### Examples

Adduced hereinafter are working examples which are intended to elucidate the invention described in detail. It will be appreciated that the invention is not restricted to these described working examples.

### Preparation of Compositions

For the preparation of the exemplary compositions, 100 g of component **A,** and in case of **C1** to **C10** (Ref.) the respective amount of water, were mixed with 55 g of component **B** in a speedmixer device for 30 s at 2'000 rpm. This corresponds to a volume mixing ratio of components **A:B** of approximately 1:1 and thus corresponds to a mass mixing ratio of components **A:B** of 1.82. The compounds used in the exemplary compositions and their respective amounts are summarized in tables 1 to 3.

The compounds used in the compositions are shown in table 1, while the compositions themselves are shown in tables 2 and 3.

The mixed composition was casted into an open square mold (10x10x3 cm) at room temperature. Demolding took place after approximately 10 minutes and the specimen was left to cure at room temperature conditions.

### Test Methods

The **shore D hardness** was measured 16 hours after curing with a Bareis Shore D durometer. The measurement was read after 3 seconds.

To determine the **density,** the specimen was measured in its dimensions (length, width, height) in order to calculate the volume and weighted on a scale 16 hours after curing. The density was then calculated by dividing the mass by the volume.

The results are summarized in table 4.

Lastly, **gas formation** was judged qualitatively. The specimens were vacuum packed and sealed in a commercially obtainable plastic foil bag 1 or 2 days after curing. In some cases, water was added to the foil bag (5 drops) prior to vacuuming. If gas evolution happened, the sealed bag would expand and the vacuum would deteriorate. Gas formation (expansion of the sealed bag) was subsequently evaluated by eye according to the following code:

| | |
|---|---|
| ++ | significant gas formation |
| +/- | slight gas formation |
| -- | no gas formation |

The results are summarized in table 5.

### Compounds used in the Compositions

**Table 1: Compounds used for example compositions.**

| **Name** | **Description** |
|---|---|
| **Polyol P1** | Polyester polyol |
| | 2-functional, 238 mg KOH/g |
| **Polyol P2** | Partially branched polyester polyol |
| | 2.25-functional, 53.5 mg KOH/mg |
| **Polyol P3** | Polyether polyol based on ethylenediamine and propylene oxide |
| | 4-functional, 752.5 mg KOH/g |
| **Polyol P4** | Polyether polyol |
| | 3-functional, 550 mg KOH mg/g |
| **Drying Agent DA** | Zeolite powder, 3 Å pore size |
| **Catalyst C** | Dioctyltin dilaurate (DOTL) |
| **Latent Water LW** | H₂O |
| **Isocyanate** I | Mixture of diphenylmethan-4,4-diisocyanate (MDI) with isomers and higher functional honologues (PMDI) |
| | 2.7 functional, 31.5 % NCO content |
| **Filler** | Fumed silica |
| **Defoamer** | Polyether-modified polysiloxane copolymer |

### Compositions

### Composition C1 is inventive.

Comparative examples are identified in Tables 2 and 4 by "(Ref.)".

**Table 2: Composition of Component A with values are in wt.-% totaling 100%. The amount of latent water LW is given in wt.-% with respect to the weight of the drying DA.**

| **A** | **C0** (Ref.) | **C1** | **C2** | **C3** | **C4** | **C5** | **C6** | **C7** | **C8** (Ref.) | **C9** (Ref.) | **C10** (Ref.) |
|---|---|---|---|---|---|---|---|---|---|---|---|
| **P1** | 40.5 | 40.5 | 40.5 | 40.5 | 40.5 | 40.5 | 40.5 | 40.5 | 40 | 40.5 | 40.5 |
| **P2** | 38.1 | 38.1 | 38.1 | 38.1 | 38.1 | 38.1 | 38.1 | 38.1 | 38 | 38.1 | 38.1 |
| **P3** | 100 | 100 | 100 | 10.0 | 100 | 100 | 100 | 100 | 10 | 100 | 100 |
| **P4** | 5.0 | 5.0 | 5.0 | 5.0 | 5.0 | 5.0 | 5.0 | 5.0 | 5 | 5.0 | 5.0 |
| **DA** | 6.0 | 6.0 | 6.0 | 6.0 | 6.0 | 6.0 | 6.0 | 6.0 | 6 | 6.0 | 6.0 |
| **C** | 0.005 | 0.005 | 0.005 | 0.005 | 0.005 | 0.005 | 0.005 | 0.005 | 0.005 | 0.005 | 0.005 |
| **Filler** | 0.3 | 0.3 | 0.3 | 0.3 | 0.3 | 0.3 | 0.3 | 0.3 | 0.3 | 0.3 | 0.3 |
| **Defoamer** | 0.095 | 0.095 | 0.095 | 0.095 | 0.095 | 0.095 | 0.095 | 0.095 | 0.05 | 0.095 | 0.095 |
| **LW** | 0 | 2 | 4 | 6 | 8 | 10 | 12 | 14 | 16 | 18 | 20 |

**Table 3: Composition of Component B with values are in wt.-% totaling 100%.**

| **B** | **C0** (Ref.) | **C1** | **C2** | **C3** | **C4** | **C5** | **C6** | **C7** | **C8** (Ref.) | **C9** (Ref.) | **C10** (Ref.) |
|---|---|---|---|---|---|---|---|---|---|---|---|
| I | 100 | 100 | 100 | 100 | 100 | 100 | 100 | 100 | 100 | 100 | 100 |

### Material Tests

The results of the material tests are shown in table 3.

Because inventive examples **C1** to **C7** show adequate shore D hardness and density, no gas evolution is assumed. **C8** (Ref.), **C9** (Ref.) and **C10** (Ref.) however show lower shore D hardness and lower density, indicating gas evolution.

**Table 4: Shore D and density measurements.**

| **Results** | **C0** (Ref.) | **C1** | **C2** | **C3** | **C4** | **C5** | **C6** | **C7** | **C8** (Ref.) | **C9** (Ref.) | **C10** (Ref.) |
|---|---|---|---|---|---|---|---|---|---|---|---|
| Shore D | 72 | 72 | 72 | 72 | 72 | 72 | 72 | 70 | 67 | 52 | 48 |
| Density (g/cm³) | 1.3 | 1.3 | 1.3 | 1.3 | 1.2 | 1.3 | 1.3 | 1.2 | 1.2 | 0.9 | 0.7 |

Reference example **C0** (Ref.) shows significant gas formation with and without additional water after being sealed 1 day after curing. Also, inventive example C5 shows slight gas formation after being sealed 1 day after curing with and without additional water. This indicates that the reaction has not completely finished after 1 day of curing time.

However, for the specimens which were sealed 2 days after curing, the inventive composition **C5** shows no gas formation with and without additional water. Furthermore **C0** (Ref.) shows significant gas formation with added water after being sealed 2 days after curing with added water and also slight gas formation without additional water.

**Table 5: Gas formation tests.**

| **Results** | **Sealed date** | **Added water** | **C0** (Ref.) | **C5** |
|---|---|---|---|---|
| Gas Formation | Day 1 after curing | No | ++ | +/- |
| | Day 1 after curing | Yes | ++ | +/- |
| | Day 2 after curing | No | +/- | -- |
| | Day 2 after curing | Yes | ++ | - |

## Claims

1. Two-component polyurethane composition comprising
in a first component **A**
- at least one polyol **P;**
- at least one drying agent **DA;**
and in a second component **B**
- at least one isocyanate **I;**
**characterized in that** the first component **A** contains latent water **LW** reversibly bound by the drying agent **DA.**

2. The two-component polyurethane composition according to claim 1, **characterized in that** the drying agent **DA** comprises a physical or chemical desiccant.

3. The two-component polyurethane composition according to any of claims 1 to 2, **characterized in that** the drying agent **DA** comprises molecular sieves, in particular molecular sieves made from zeolites.

4. The two-component polyurethane composition according to any of claims 1 to 3, **characterized in that** the drying agent **DA** comprises molecular sieves, in particular molecular sieves made from zeolites with pore openings of between 1 and 8 Å, preferably between 2 and 6 Å, most preferably between 2 and 5 Å.

5. The two-component polyurethane composition according to any of claims 1 to 4, **characterized in that** the amount of latent water **LW** in the drying agent **DA** is between more than 0 and 30 wt.-%, preferably between 0.5 and 25 wt.-%, most preferably between 1 and 20 wt.-% with respect to the weight of component **DA** in component **A.**

6. The two-component polyurethane composition according to any of claims 1 to 5, **characterized in that** the drying agent **DA** has been loaded with between more than 0 and 75%, preferably with between 0.1 and 60 %, most preferably with between 1 and 50 % of water with respect to the total water absorption capacity of the drying agent **DA.**

7. The two-component polyurethane composition according to any of claims 1 to 6, **characterized in that** component **A** comprises between more than 0 and 10 wt.-%, preferably between 0.1 and 10 wt.-%, most preferably between 1 and 5 wt.-% of latent water **LW** with respect to the total weight of the first component **A** of water.

8. The two-component polyurethane composition according to any of claims 1 to 7, **characterized in that** the polyol **P** is a polyester polyol and/or polyether polyol.

9. The two-component polyurethane composition according to any of claims 1 to 8, **characterized in that** the isocyanate **I** is an aromatic, aliphatic or cycloaliphatic diisocyanate, in particular methylene diphenyl diisocyanate (MDI) and/or isophorene diisocyanate (IPDI) and/or toluene diisocyanate (TDI).

10. The two-component polyurethane composition according to any of claims 1 to 9, **characterized in that** the composition comprises a catalyst **C** selected from tin, bismuth or zirconium compounds, in particular organotin compounds, especially dioctyltin compounds such as dioctyltin dilaurate.

11. The two-component polyurethane composition according to any of claims 1 to 10, **characterized in that** the composition comprises additives, such as stabilizers, thixotropic agents, plasticizers defoamers and/or fillers, particularly defoamer and/or fillers.

12. The two-component polyurethane composition according to any of claims 1 to 11, **characterized in that** said composition comprises
in a first component **A**
- 40 to 95 wt.-% of at least one polyol **P;**
- 0.5 to 20 wt.-% of at least one drying agent **DA;**
- 0.01 to 2 wt.-% of at least one catalyst **C;**
- 0 to 30 wt.-% of at least one additive;
- 0.1 to 10 wt. % of latent water **LW;**
With respect to the total weight of component **A,**
and in a second component **B**
- 60 to 100 wt.-% of at least one isocyanate **I;**
- 0 to 20 wt.-% of at least one additive;
With respect to the total weight of component **B.**

13. Use of two-component polyurethane composition according to any of claims 1 to 12 in printing applications, in particular as a coating, preferably a top coating and/or as a layer for a printing sleeve.

14. A method of coating a substrate comprising the steps of
i) Mixing the two components A and B of the two-component polyurethane composition according to any of claims 1 to 12 to a substrate;
ii) Applying the composition from i) to a substrate as a coating;
iii) Curing of the coating from ii) at standard climatic conditions.

15. An article obtained from the method as claimed in claim 14, in particular a printing sleeve.
